# EUROPEAN PATENT APPLICATION

(11) **EP 1 505 482 A1**
(43) Date of publication of application: **09.02.2005**
(21) Application number: 03017963.4
(22) Date of filing: 06.08.2003
(51) Int. Cl.: G06F 3/033

(54) **Cursor Pointing Device with two axis acceleration sensor**

(71) Applicant: TOPSEED TECHNOLOGY CORP., Chung Ho City, Taipei Hsien, Taiwan 235 (TW)
(72) Inventor: Chen, Shoei-Lai, Taipei, Taiwan 237 (TW)
(74) Representative: TER MEER STEINMEISTER & PARTNER GbR

(57) **Abstract**

A cursor pointing device can be operated on a surface or a space to control the cursor on a computer display. A vibration sensor is used as a sensor to detect and translate the two-dimensional motion of the cursor pointing device. The vibration sensor is a two-axis accelerometer. When there is a movement of the cursor pointing device, a positioning signal can be generated by calculating the acceleration and the direction of the movement to be sent to the computer.

## Description

### BACKGROUND OF THE INVENTION

The present invention relates in general to a cursor pointing device and, more particularly, to an electrical cursor pointing device using a vibration sensor for controlling a cursor on a computer display.

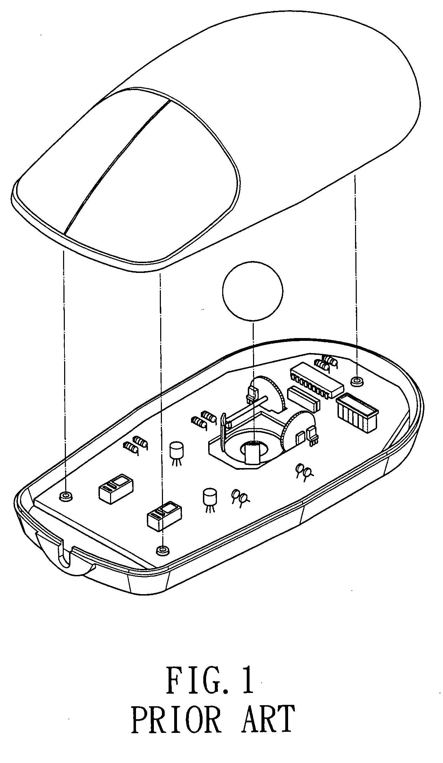

It is well-known to control a two-dimensional movement of a cursor on a computer display using the cursor pointing device, the most common of which is known as a mouse. Also the mouse is developed as one of the most important inputting device for a GUI (Graphic User Interface) system. Conventional mice can be gathered into two categories basically: a mechanical type, or an optical type. A mechanical mouse, as shown in Figure 1, is generally constructed having a spherical ball protruding below a bottom surface of the mouse, the ball freely rotating as the mouse is moved by the user along a flat surface. Inside the mouse, the ball is coupled to two wheels in X-axis and Y-axis as the sensors which detect and translate the motion of the mouse; this translated motional signal is output from the mouse to the computer. However, a mechanical mouse relies on the rolling action of the ball on a surface. There are certain mechanical problems which are inherent with these mice, such as the problem in maintaining good frictional contact with a surface. If the ball get dirty, they slip on the work surface rather than roll, and if a mechanical mouse encounters a slippery portion of a surface, the resulting output signal will be inaccurate. Mechanical mice use a relatively large number of close tolerance parts and are difficult to make in mass production. Moreover, mechanical mice are subject mechanical noise, such as lash and vibration, and require frequent cleaning.

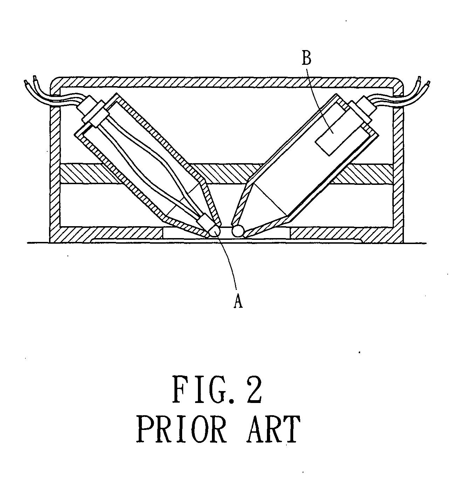

An optical mouse, or an electro-optical mouse, as shown in Figure 2, is generally included of a light source (A), such as a LED, to emit light on a flat surface, and a photo detector (B) to detect the reflect light. During the motion of the electron-optical mouse, a different reflectivity is obtained when the emitting light is reflected from different locations. The photo detector (B) is as a sensor to detect and translate the motion of the mouse according to the changing reflectivity. However, an electro-optical mouse requires the flat surface, which has a defined or predetermined pattern of light and dark areas or colors, in order to operate. If the work surface has only one color, such as a steel desk surface, or a transparent surface, such as a glass or a transparent pad, the electro-optical mouse cannot work anymore. Although the photo detector is enhanced recently to detect very small distinction of the reflectivity on a mono-color surface, the electro-optical mouse still does not work on the glass or the transparent pad.

Furthermore, both mechanical and electro-optical mice disadvantageously need to be operated on a flat surface or pad. This limits the use and the design of the mouse. For example, when a laptop computer is used in a car or without a flat surface nearby, there will be so many inconveniences to use the conventional mouse. Moreover, both mechanical and electro-optical mice have exposed elements, such as the balls and the photo detectors; therefore, there will exist an opening on the mouse case to expose these elements and it is impossible to provide a waterproof mouse.

### BRIEF SUMMARY OF THE INVENTION

The object of the present invention is to provide a cursor pointing device, in which a vibration sensor is used as a sensor to detect and translate the two-dimensional motion thereof. There is no need of the balls as in the mechanical mice and the changing reflectivity as in the electro-optical mice. Therefore, there is no opening in the bottom of the case to expose any element of the present device. Furthermore, it does not require frequent cleaning and concern the slippery contact surface as in the mechanical mice. Also, it can be operated on the glass or the transparent pad which the electro-optical mice can not. The cursor pointing device of the present invention can be regarded as a third category of absolutely electrical mouse rather than conventional mechanical or electro-optical mouse.

Another object of the present invention is to provide a cursor pointing device, in which a vibration sensor is used so that a compact design thereof can be achieved to show as a ring type, a bracelet type, or a pen type mouse and etc. This kind of design can be totally different from the conventional mouse.

Still Another object of the present invention is to provide a cursor pointing device, in which a vibration sensor is used and can be installed inside the case without any opening formed on the case. It can be achieved to provide a waterproof cursor pointing device.

### BRIEF DESCRIPTION OF THE DRAWINGS

These as well as other features of the present invention will become more apparent upon reference to the drawings wherein:
Figure 1 shows a perspective view of a conventional mechanical mouse;
Figure 2 shows a perspective view of a conventional electro-optical mouse;
Figure 3 shows a perspective view of a cursor pointing device according to the present invention; and
Figure 4 shows a circuit diagram of the cursor pointing device according to the present invention.

### DETAILED DESCRIPTION OF THE INVENTION

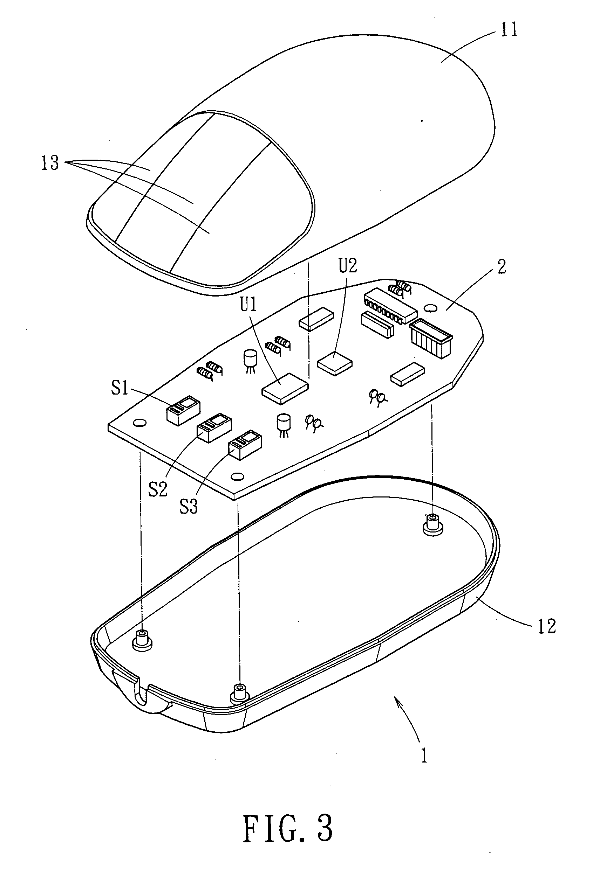

Please refer to Figure 3, the cursor pointing device in vibration control of the present invention includes a upper housing 11 and a bottom housing 12 combined as a mouse case 1, a circuit board 2 furnished inside the case 1 and a plurality of buttons 13. The cursor pointing device of present invention can be connected to a computer by a cord or via wireless transmission. A vibration sensor is used as a sensor to detect and translate the motion of the present cursor pointing device. The vibration sensor is an electronic two-axis accelerometer which is made as a semiconductor element in solid state. There is no opening needed on the bottom housing 12 because it does not require to expose any element, such as the ball of the mechanical mouse or the photo detector of the electro-optical mouse, inside the case 1. It is obviously the cursor point device of the present invention can basically provide waterproof function against water formed on a work surface. If it is required to provide the whole device with waterproofmg, the only thing to do is to seal the gaps between two housing 11, 12 and the buttons 13. Therefore, it can be achieved to provide a waterproof cursor pointing device according to the present invention.

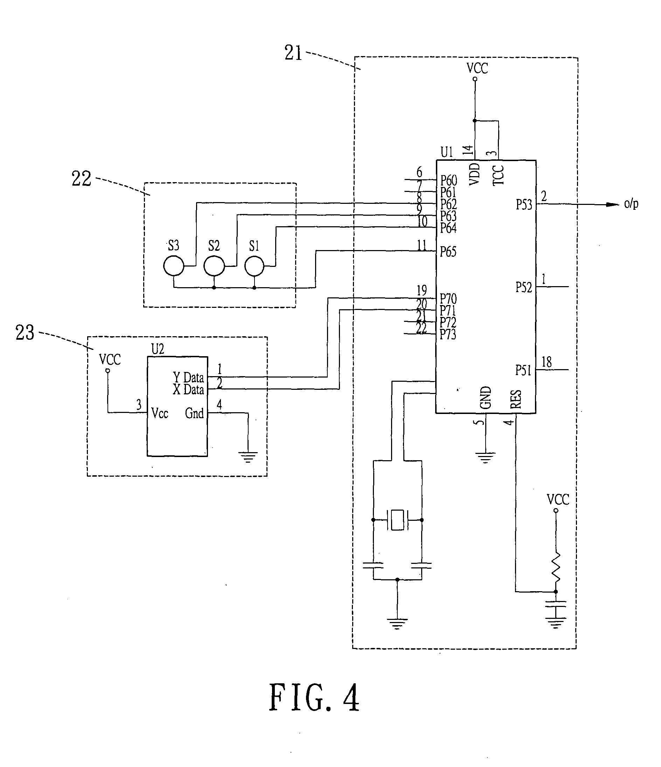

As shown in Figure 4, the diagram of the circuit board 2 includes a controller 21, a set of button device 22 and a vibration sensing device 23. The controller 21 includes a microprocessor U1 as the core element connected with the button device 22 and the vibration sensing device 23. The button device 22 includes two or more switches, such as three switches S1~S3 in this preferred embodiment, with respect to the positions beneath the corresponding buttons 13 to provide the various button functions in conventional mouse device. The vibration sensing device 23 includes an accelerometer U2 or other similar sensor. The accelerometer U2 is a solid-state semiconductor element such as the MXD2125GL products manufactured by MEMSIC Company. The accelerometer U2 is used to detect a two-dimension movement of the present device. When there is a movement, a positioning signal can be generated by calculating the acceleration and the direction of the movement. The controller 21 is used to receive the signals from the button device 22 and the vibration sensing device 23, and sent the corresponding processed signals to the computer by the cord or via the wireless transmission. Due to the vibration sensor 23 is used to control the movement of the computer cursor, the cursor pointing device of the present invention can be operated on a flat surface like the convention mice, but there is no restriction about the color or friction property of the work surface. It can say that any kind of work surface is suitable. In the condition, if there is no work surface can be used, the cursor pointing device of the present invention still can be hand-held to be operated in the space to control the movement of the computer cursor because the vibration sensor is used. It can control the direction of cursor by correspondingly moving the present device, and control the moving distance of cursor according to the acceleration of the present device.

According to the cursor pointing device in vibration control of the present invention, it can be regarded as a third category of absolutely electrical mouse rather than conventional mechanical or electro-optical mouse. It provides at least the advantages as follows.
1. The sensor of the present cursor pointing device does not contact to the work surface; therefore, it will not get dirty or worn and need to be maintained or cleaned.
2. The cursor pointing device of the present invention can be operated on any surface, such as the glass or transparent pad, regardless of its color or frictional property.
3. The cursor pointing device of the present invention can be hand-held to be operated in the space without a surface. Therefore, it is convenient for use especially in the laptop computer.
4. The use of the vibration sensor in present cursor pointing device can provide a compact design to show as a ring type, a bracelet type, or a pen type mouse and etc. This kind of design can be totally different from the conventional mouse.
5. Because the vibration sensor needs not to be exposed, it can basically provide waterproof function of the present device against the water formed on a work surface. If it is required to provide the whole device with waterproofing, the only thing to do is to seal the gaps on the case. Therefore, it can be achieved to provide a waterproof cursor pointing device according to the present invention.

This disclosure provides exemplary embodiments of the present invention. The scope of the present invention is not limited by these exemplary embodiments. Numerous variations, whether explicitly provided for by the specification or implied by the specification, such as variations in structure, dimension, type of material and manufacturing process may be implemented by one of skill in the art in view of this disclosure.

## Claims

1. A cursor pointing device, to be operated in a surface, for use in a computer, the cursor pointing device comprising:
a case;
a controller; and
a vibration sensor installed in the case, including a two-axis accelerometer for detecting a two-dimensional movement of the case to send a positioning signal to the controller which send a motional signal to the computer to control a cursor thereof.

2. The cursor pointing device of claim 1, the motional signal is send to the computer by a cord or via a wireless transmission.

3. The cursor pointing device of claim 1, wherein the case has a ring, a bracelet or a pen shape.

4. The cursor pointing device of claim 1, wherein the controller includes a microprocessor.

5. The cursor pointing device of claim 1, wherein the surface is a flat surface.

6. A cursor pointing device, to be operated in a space, for use in a computer, the cursor pointing device comprising:
a case;
a controller; and
a vibration sensor installed in the case, including a two-axis accelerometer for detecting a two-dimensional movement of the case to send a positioning signal to the controller which send a motional signal to the computer to control a cursor thereof.

7. The cursor pointing device of claim 6, the motional signal is send to the computer by a cord or via a wireless transmission.

8. The cursor pointing device of claim 6, wherein the case has a ring, a bracelet or a pen shape.

9. The cursor pointing device of claim 6, wherein the controller includes a microprocessor.
